# EUROPÄISCHE PATENTANMELDUNG

(11) **EP 2 018 819 A1**
(43) Veröffentlichungstag der Anmeldung: **28.01.2009**
(21) Anmeldenummer: 08012798.8
(22) Anmeldetag: 16.07.2008
(51) Int. Cl.: A47C 21/04, A47C 27/14, A47C 27/08

(54) **Matratze**

(30) Priorität: 21.07.2007 DE 102007034126
(71) Anmelder: Atlantis Wasserbetten Limited, 96515 Hüttengrund (DE)
(72) Erfinder: Beiergrösslein, Ludger, 96317 Kronach/Gundeldorf (DE)
(74) Vertreter: Hofmann, Matthias

(57) **Zusammenfassung**

Eine Matratze (1) hat eine körperstützende, insbesondere viskoelastische Schaumstofflage (4). Die Matratze (1) hat eine Heizlage (5) mit einer Wärmequelle (12). Die Heizlage (5) ist thermisch an die körperunterstützende Schaumstofflage (4) angekoppelt. Die Schaumstofflage (4) hat eine Mehrzahl von Durchgangsöffnungen, die eine Oberseite der Schaumstofflage (4) mit einer Unterseite der Schaumstofflage (4) verbinden. Es resultiert eine Matratze, bei der der Liegekomfort unabhängig von einer Umgebungstemperatur ist.

## Beschreibung

Die Erfindung betrifft eine Matratze nach dem Oberbegriff des Anspruchs 1.

Eine derartige Matratze ist beispielsweise aus der US 2006/0288490 A1 bekannt. Dort ist eine körperunterstützende Schaumstofflage aus viskoelastischem Material eingesetzt, nämlich aus einem Schaum, der bei der Abgabe von Körperwärme nachgibt. Wenn die Matratze in einer kühlen Umgebung, also beispielsweise in einem nicht beheizten Schlafzimmer im Winter, angeordnet ist, wird bei der bekannten Matratze die körperunterstützende Schaumstofflage recht hart. Bei erhöhter Umgebungstemperatur, beispielsweise im Sommer, ist die körperunterstützende Schaumstofflage der bekannten Matratze wiederum recht weich. Der Liegekomfort des Benutzers ist bei der bekannten Matratze daher von der Umgebungstemperatur abhängig, was grundsätzlich unerwünscht ist.

Weitere Matratzen sind bekannt aus der US 5 647 077, der DE 20 2006 001 656 U1 und der DE 100 24 299 A1.

Es ist eine Aufgabe der vorliegenden Erfindung, eine Matratze der eingangs genannten Art derart weiterzubilden, dass der Liegekomfort der Matratze unabhängig von einer Umgebungstemperatur ist.

Diese Aufgabe wird erfindungsgemäß gelöst durch eine Matratze mit den im Kennzeichnungsteil des Anspruchs 1 angegebenen Merkmalen.

Die zusätzliche Heizlage sorgt für eine umgebungstemperaturunabhängige Temperierung der körperunterstützenden Schaumstofflage sorgt, so dass der Liegekomfort nun umgebungstemperaturunabhängig ist. Die Durchgangsöffnungen in der Schaumstofflage, die insbesondere als Durchgangsbohrungen ausgestaltet sein können, verbessern die Luftzirkulation durch diese. Insbesondere können die Durchgangsöffnungen einen besseren Feuchtigkeitstransport durch die Schaumstofflage gewährleisten. Es ist dann sichergestellt, dass Feuchtigkeit die Schaumstofflage schnell verlassen kann. Zudem können die Durchgangsöffnungen zur Möglichkeit eines schnelleren Erwärmens der Schaumstofflage sorgen. Auch die Flexibilität der Schaumstofflage kann durch die Durchgangsöffnungen verbessert werden. Es kann dann beispielsweise ein relativ steifes Grundmaterial für die Schaumstofflage zum Einsatz kommen, wobei diese Steifigkeit durch die Durchgangsöffnungen verringert ist.

Durchgangsöffnungen unterschiedlicher Weite nach Anspruch 2 können gezielt zur Variation der Eigenschaften der Schaumstofflage über deren Fläche genutzt werden. So kann beispielsweise die Flexibilität der Schaumstofflage über die Fläche aufgrund der Weitenvariation der Durchgangsöffnungen variabel gestaltet sein, so dass insbesondere Bereiche der Schaumstofflage unterschiedlicher Härte resultieren. Weiterhin kann in bestimmten Bereichen beispielsweise die Luftzirkulation, der Feuchtigkeitstransport oder die Erwärmungsgeschwindigkeit an bestimmte Vorgaben angepasst werden.

Eine Rasteranordnung nach Anspruch 3 lässt sich definiert herstellen.

Rasterbereiche nach Anspruch 4 sorgen für definierte Flächenabschnitte der Matratze mit vorgebbaren unterschiedlichen Eigenschaften. Rasterbereiche mit gleichem Rastermaß nach Anspruch 5 können sich in der Weite der Durchgangsöffnungen unterscheiden, so dass ein Freiheitsgrad zur Anpassung bestimmter Eigenschaften der Matratze verbleibt.

Rasterbereiche nach Anspruch 6 ermöglichen eine Variation der Eigenschaften der Schaumstofflage über die Vorgabe des jeweiligen Rastermaßes.

Eine viskoelastische körperunterstützende Schaumstofflage nach Anspruch 7 führt zu einem besonders guten Liegekomfort der Matratze.

Eine Temperatur-Regeleinrichtung nach Anspruch 8 ermöglicht die gezielte Vorgabe einer Wunschtemperatur für die körperunterstützende Schaumstofflage. Diese Wunschtemperatur kann insbesondere auf die Bedürfnisse des Benutzers individuell eingestellt werden.

Eine körperunterstützende Heizlage nach Anspruch 9 führt zu einer Matratze mit besonders hohem Liegekomfort.

Eine Heizlage nach Anspruch 10 kann eine besonders elegante Kombination der Funktionen "Temperierung" und "Körperunterstützung" darstellen. Insbesondere können die Vorteile von Matratzen mit einer körperunterstützenden Schaumstofflage aus viskoelastischem Schaum und eines Wasserbetts miteinander kombiniert werden. Alternativ zu einer Heizlage mit einem wärmeabgebenden Fluid ist auch eine Heizlage mit einer Heizmatte oder einer sonstigen Heizquelle möglich. Eine Druck-Steuereinrichtung, die insbesondere mit der Temperatur-Regeleinrichtung zu einer integrierten Einheit zusammengefasst sein kann, führt zu einer vorgebbaren Wunschhärte für die Heizlage. Es kann dann nicht nur die Temperatur, sondern auch der Härtegrad der Matratze vorgegeben werden, was den Komfort zusätzlich erhöht.

Eine Textilauflage nach Anspruch 11 wird vom Benutzer in der Regel als angenehm empfunden.

Eine Leisten-Umgrenzung nach Anspruch 12 führt dazu, dass die Heizlage nach allen Seiten abgedeckt ist, so dass keine zu warmen Oberflächenbereiche der Matratze entstehen.

Eine Heizlage nach Anspruch 13 hat sich, was ihren Aufbau angeht, im Zusammenhang mit der Wasserbettenkonstruktion schon bewährt. Die Heizlage hat insbesondere einen durchgehenden Wasserkern. Dies sorgt für eine optimierte Anpassung des Gegendrucks, den die Matratze auf den aufliegenden Benutzer ausübt. Das Wasser kann vom Benutzer über die gesamte Fläche der Heizlage verdrängt werden.

Eine Softschaumlage nach Anspruch 14 erhöht den Liegekomfort nochmals. Die vorzugsweise vorgesehene weitere Schaumstofflage kann als stabile Trägerlage beispielsweise auf einem Lattenrost zum Einsatz kommen.

Entsprechende Vorteile hat eine Textilauflage nach Anspruch 15.

Ein Ausführungsbeispiel der Erfindung wird nachfolgend anhand der Zeichnung näher erläutert. In dieser zeigen:
- Fig. 1: einen senkrecht zu einer Auflageebene ausgeführten, unterbro- chenen Querschnitt durch eine Matratze;
- Fig. 2: eine Aufsicht auf eine weitere Ausführung einer Matratze;
- Fig. 3: einen Ausschnitt durch einen zu Fig. 1 ähnlichen, nicht unterbro- chenen Schnitt durch die Matratze nach Fig. 2 im Bereich einer Heizlage und den hieran angrenzenden Schaumstofflagen; und
- Fig. 4: eine Aufsicht auf eine körperunterstützende Schaumstofflage der Matratzenausführungen der Fig. 1 bis 3.

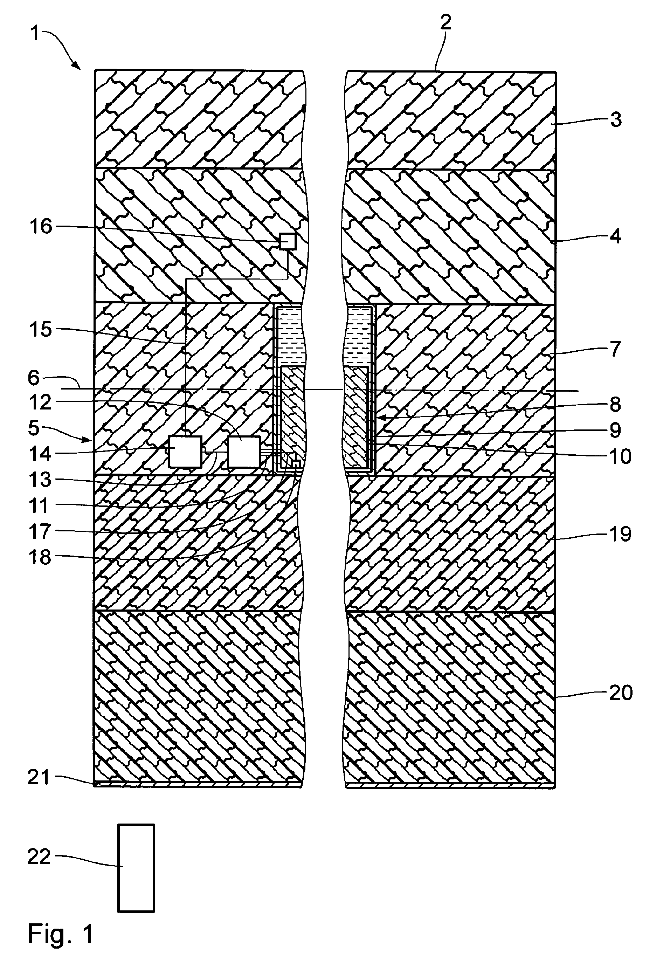

Eine Matratze 1, deren Schichtaufbau in der Fig. 1 schematisch dargestellt ist, hat direkt unterhalb einer im Schnitt der Fig. 1 zuoberst dargestellten Auflagefläche 2 eine Textilauflage 3 mit einer Füllung. Die Textilauflage 3 hat eine Stärke von 30 mm.

Die Textilauflage 3 deckt eine körperunterstützende Schaumstofflage 4 ab, die also bezogen auf die Auflagefläche 2 unterhalb der Textilauflage 3 angeordnet ist. Die körperunterstützende Schaumstofflage 4 hat eine Stärke von 40 mm und ist aus einem viskoelastischen Schaumstoff. Dieser hat eine Dichte, die im Bereich liegt zwischen 40 und 60 kg/m³. Die Schaumstofflage 4 ist in eine in der Zeichnung nicht dargestellte Tasche eingenäht, die einen Reißverschluss aufweist. Durch Öffnen des Reißverschlusses lässt sich die Schaumstofflage 4 zum Wechseln bzw. Reinigen entnehmen. Die verschiedenen Lagen der Matratze 1 können über entsprechende Reißverschluss-Verbindungen miteinander verbunden sein.

Thermisch an die körperunterstützende Schaumstofflage 4 angekoppelt ist eine insgesamt mit 5 bezeichnete Heizlage, die auf der von der Textilauflage 3 abgewandten Seite der körperunterstützenden Schaumstofflage 4 angeordnet ist. Die Heizlage 5 hat eine in einer Matratzen-Hauptebene 6 umlaufende Begrenzung 7 aus Schaumstoffleisten, die auch als Schaumstoffstollen bezeichnet werden. Diese Schaumstoffleisten sind aus einem Schaumstoff mit einer Dichte, die im Bereich liegt zwischen 40 und 60 kg/m³. Die Begrenzung 7 schließt stirnseitig umlaufend mit den anderen Lagen 3, 4 der Matratze 1 ab. Die Begrenzung 7 umgrenzt einen Wasser- bzw. Flüssigkeitskern 8 der Heizlage 5, der seinerseits von einer Vinyl-Folie 9 umgeben ist, die an einer der körperunterstützenden Schaumstofflage 4 zugewandten Seite verstärkt ausgeführt ist. Umschlossen von der Vinyl-Folie 9 wird ein Vlies 10, in dem Wasser bzw. Flüssigkeit gebunden ist. Das Vlies 10 kann als Vlieseinlage bzw. Layer ausgeführt sein. Die Heizlage 5 hat eine Stärke von 50 mm, wobei die der körperunterstützenden Schaumstofflage 4 zugewandte stärkere Schicht der Vinyl-Folie 9 eine Stärke hat von 20 mm. Die Heizlage 5 ist nach Art eines Wasserbetts aufgebaut und hat, wie die Schaumstofflage 4, ebenfalls eine körperunterstützende Funktion.

In das Vlies 10 mündet eine Zu- und Abführleitung 11 eines Durchlauferhitzers 12, der in der Fig. 1 schematisch dargestellt ist. Der Durchlauferhitzer 12 stellt eine Wärmequelle der Heizlage 5 dar. Über eine Signalleitung 13 ist der Durchlauferhitzer 12 mit einer Temperatur-Regeleinrichtung 14 verbunden. Über eine weitere Signalleitung 15 ist die Temperatur-Regeleinrichtung 14 mit einem Thermofühler 16 verbunden, der in etwa mittig in der körperunterstützenden Schaumstofflage 4 untergebracht ist.

In die Temperatur-Regeleinrichtung 14 integriert ist eine Druck-Steuereinrichtung. Letztere steht über eine weitere Signalleitung 17 mit einem innerhalb des Vlieses 10 angeordneten Druckfühler 18 in Signalverbindung. Auf der der körperunterstützenden Schaumstofflage 4 abgewandten Seite der Heizlage 5 ist eine an die Heizlage 5 angrenzende Softschaumlage 19 angeordnet. Letztere hat eine Dichte, die im Bereich liegt zwischen 35 und 40 kg/m³. Auf der der Heizlage 5 abgewandten Seite der Softschaumlage 19 ist eine an die Softschaumlage 19 angrenzende weitere Schaumstofflage 20 angeordnet, die eine Dichte aufweist, die im Bereich liegt zwischen 40 und 60 kg/m³. Die Softschaumlage 19 hat eine Stärke von 40 mm. Die weitere Schaumstofflage 20 hat eine Stärke von 50 mm.

Die weitere Schaumstofflage 20 ist von einer weiteren, ungefüllten Textilauflage 21 abgedeckt, die eine Stärke von 2 mm hat und insbesondere aus einem Vliesstoff gefertigt ist. Die Textilauflage 21 kann die gesamte Matratze als so genannte Koffertechnik umschließen.

Die Softschaumlage 19 beeinflusst die Liegeeigenschaften der Matratze 1 positiv. Die weitere, härtere Schaumstofflage 20 dient als beispielsweise direkt auf einen Lattenrost aufliegende Trägerlage.

Die gesamte Matratze 1 hat eine Stärke von 212 mm.

Die Temperatur-Regeleinrichtung und Druck-Steuereinrichtung 14 steht drahtlos mit einer schematisch in der Fig. 1 dargestellten Fernbedienung 22 in Signalverbindung.

Die Matratze 1 wird folgendermaßen betrieben: Mit der Fernbedienung 22 stellt der Benutzer eine Wunschtemperatur und eine Wunschhärte der Wasserbett-Heizlage 5 ein. Über die Temperatur-Regeleinrichtung 14 wird das Wasser bzw. die Flüssigkeit im Wasserkern 8 so temperiert, dass der Thermofühler 16 eine Temperatur misst, die innerhalb eines über die Wunschtemperatur vorgegebenen Sollwert-Bereichs liegt. Die Druck-Steuereinrichtung 14 pumpt Wasser bzw. Flüssigkeit zwischen dem Vlies 10 und einem nicht dargestellten Wasservorrat, bis, gemessen durch den Druckfühler 18, im Wasserkern 8 ein Wasser- bzw. Flüssigkeitsdruck entsprechend der gewünschten Härte der Wasserbett-Heizlage 5 vorliegt.

Bei einer alternativen, nicht dargestellten Ausführung wird der Härtegrad der Wasserbett-Heizlage 5 über den Wasserkern 8 selbst geregelt, indem diesem über einen eingeschweißten Einfüllstutzen von außen Wasser entnommen bzw. zugeführt wird.

Über die Fernbedienung 22 ist eine Feinabstimmung der Wunschtemperatur und der Wunschhärte der Matratze 1 möglich. Die Wärme des Wasserkerns 8 wird über die thermische Ankopplung auf die körperunterstützende Schaumstofflage 4 übertragen, so dass die Textilauflage 3 eine für den Benutzer angenehme Temperatur hat.

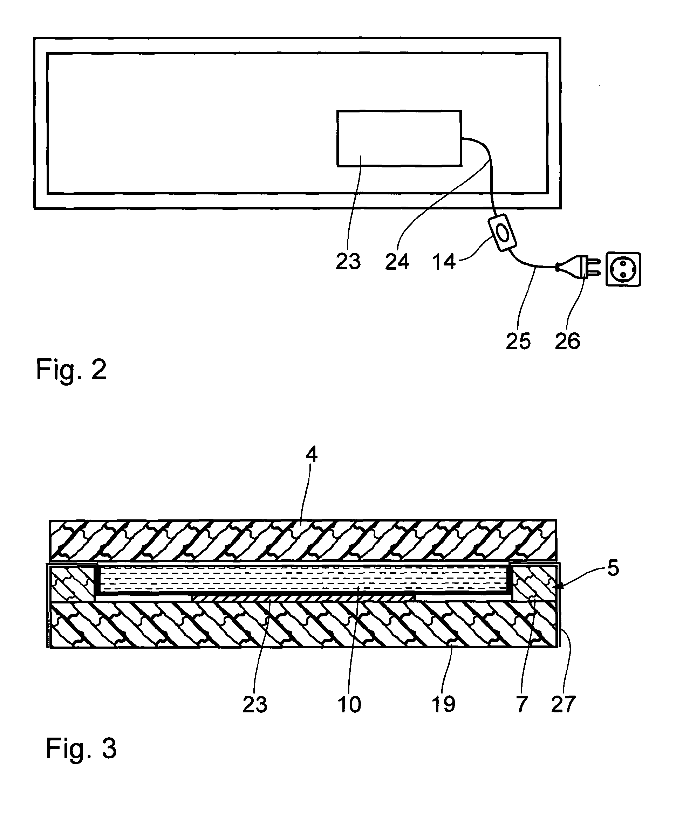

Fig. 2 und 3 zeigen eine weitere Ausführung einer Matratze 1. Komponenten, die denjenigen entsprechen, die vorstehend schon unter Bezugnahme auf die Fig. 1 erläutert wurden, tragen die gleichen Bezugszeichen und werden nicht nochmals im Einzelnen diskutiert.

Als Wärmequelle dient bei der Ausführung der Matratze 1 nach den Fig. 2 und 3 eine Heizmatte 23. Diese ist zwischen der Softschaumlage 19 und dem Vlies 10 mit dem Wasserkern angeordnet. Wie der schematischen Draufsicht nach Fig. 2 zu entnehmen ist, nimmt die Heizmatte 23 nur eine kleine Fläche verglichen mit der gesamten Fläche der Matratze 1 im Fußbereich ein. Der Kopfbereich ist in der Fig. 2 links, der Fußbereich rechts. Durch die Heizmatte 23 temperiertes Wasser im Vlies 10 verteilt sich durch Konvektion im gesamten Wasserkern, sodass die gesamte Matratze 1 gleichmäßig temperiert ist. Die Heizmatte 23 hat eine Leistungsaufnahme zwischen 100 W und 300 W. Eine Temperaturregelung ist zwischen 25° C und 35° C mit einer Genauigkeit von etwa 0,1° C möglich.

Über ein Kabel 24 steht die Heizmatte 23 mit der Temperatur-Regeleinrichtung 14 in Signalverbindung. Die Heizmatte 23 und die Temperatur-Regeleinrichtung 14 stehen über ein Netzkabel 25 mit einem Netzstecker 26 in Verbindung.

Zwischen der Heizmatte 23 und dem Vlies 10 kann noch eine Sicherheitswanne 27 angeordnet sein, die verhindert, dass aus dem Wasserkern unerwünscht austretendes Wasser die Heizmatte 23 erreicht und durch die darunter liegenden Lagen dringt.

Die Funktion der Matratze 1 nach den Fig. 2 und 3 hinsichtlich der Temperierung und der Regelung des Härtegrades entspricht dem, was vorstehend im Zusammenhang mit der Matratze 1 nach Fig. 1 erläutert wurde. Die Feinabstimmung der Wunschtemperatur erfolgt bei der Matratze 1 nach den Fig. 2 und 3 über die Temperatur-Regeleinrichtung 14. Eine Härtegrad-Regelung erfolgt über Entnahme bzw. Zugabe von Wasser über einen nicht dargestellten eingeschweißten Einfüllstutzen, der bedarfsweise eine Fluidverbindung von außen hin zum Wasserkern herstellt.

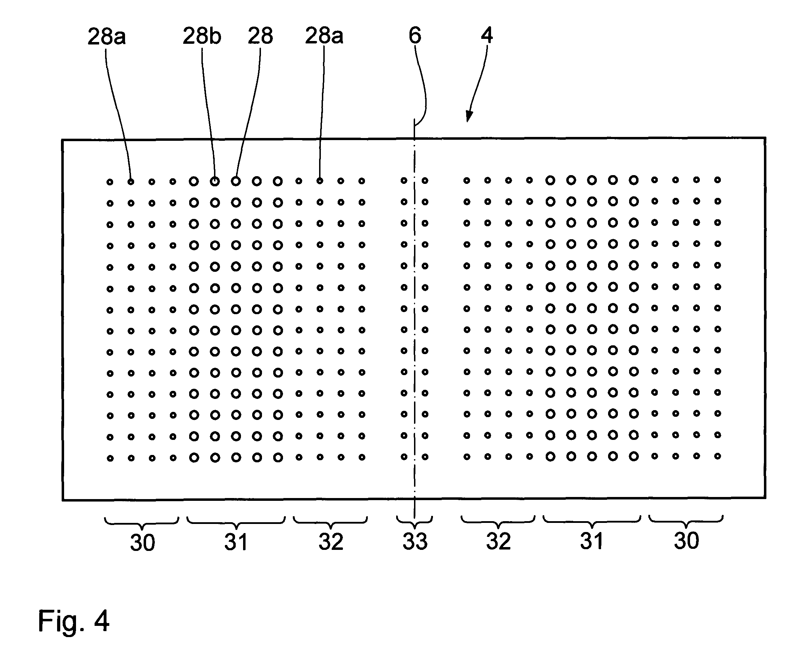

Fig. 4 zeigt auf eine Aufsicht auf die Schaumstofflage 4, die in dieser Form bei den vorstehend beschriebenen Matratzenausführungen zum Einsatz kommen kann. Die Schaumstofflage 4 hat eine Mehrzahl von Durchgangsöffnungen in Form von Durchgangsbohrungen 28, die eine Oberseite der Schaumstofflage, die beispielsweise dem Betrachter der Fig. 4 zugewandt ist, mit einer Unterseite der Schaumstofflage 4, die beispielsweise dem Betrachter der Fig. 4 abgewandt ist, verbinden. Die Durchgangsbohrungen 28 mit einem kleineren Durchmesser von 12 mm werden nachfolgend auch mit der Bezugsziffer 28a und die Durchgangsbohrungen 28 mit einem größeren Durchmesser von 20 mm werden mit der Bezugsziffer 28b bezeichnet.

Die Durchgangsbohrungen 28 liegen in einer Rasteranordnung vor. In der Fig. 4 von links nach rechts liegt zunächst ein erster Rasterbereich 30 mit vier Rasterspalten mit einem Rastermaß von 60 mm und Durchgangsbohrungen 28a mit einem Durchmesser von 12 mm vor. Nach rechts schließt sich ein weiterer Rasterbereich 31 mit fünf Rasterspalten mit einem Rastermaß von 60 mm und Durchgangsbohrungen 28b mit einem Durchmesser von 20 mm vor. Nach rechts schließt sich ein weiterer Rasterbereich 32 mit vier Rasterspalten mit einem Rastermaß von 60 mm und Durchgangsbohrungen 28a mit einem Durchmesser von 12 mm vor. Nach rechts schließt sich dann ein Abschnitt mit einer Breite 120 mm an, in denen keine Durchgangsbohrung vorliegt.

Es schließt sich nach rechts ein weiterer Rasterbereich 33 mit zwei Rasterspalten mit Durchgangsbohrungen 28a an. Nach rechts folgt dann wiederum ein Bereich, der keine Durchgangsbohrungen aufweist und 120 mm breit ist. Nach rechts folgt dann wiederum eine Sequenz aus Rasterbereichen 30, 31 und 32, so dass die Anordnung der Durchgangsbohrungen 28 zur Hauptebene 6 symmetrisch ist.

Die Rasterbereiche 30 bis 33 haben alle das gleiche Rastermaß. Die beiden durchgangsbohrungsfreien Bereiche beiderseits des Rasterbereichs 33 können auch als Rasterbereiche mit jeweils zwei angrenzenden Rasterspalten und einem Rastermaß von 120 mm in in der Fig. 4 horizontaler und von 60 mm in in der Fig. 4 vertikaler Richtung aufgefasst werden.

Die Durchgangsbohrungen 28a, 28b der Rasterbereiche 30 bis 33 sorgen für eine höhere Luftzirkulation zwischen der Heizlage 5 und der Matratzenoberseite, also insbesondere der Textilauflage 3. Insbesondere ist ein verbesserter Transport von Feuchtigkeit durch die Schaumstofflage 4 längs der Durchgangsbohrungen 28 gewährleistet. Aufgrund der Durchgangsbohrungen 28 ergibt sich zudem durch Konvektion eine beschleunigte Erwärmung der Schaumstofflage 4.

Über das Rastermaß und den Durchmesser der Durchgangsbohrungen 28a, 28b in den Rasterbereichen 30 bis 33 sowie über die Ausdehnung der durchgangsbohrungsfreien Bereiche lässt sich zudem eine Unterteilung der Matratze 1 in Auflagenbereiche unterschiedlicher Härten erreichen. Dies kann unterstützt werden durch einen Noppenprofilschnitt der Schaumstofflage 4, der eine entsprechend den insgesamt sieben Rasterabschnitten ausgebildete 7-Zonen-Unterteilung aufweist. Auch dieser Noppenprofilschnitt sorgt für eine verbesserte Luftzirkulation.

## Patentansprüche

1. Matratze (1)
- mit einer körperunterstützenden Schaumstofflage (4),
- mit einer Heizlage (5) mit einer Wärmequelle (12), wobei die Heizlage (5) thermisch an die körperunterstützende Schaumstofflage (4) angekoppelt ist,
**dadurch gekennzeichnet, dass** die Schaumstofflage (4) eine Mehrzahl von Durchgangsöffnungen (28) aufweist, die eine Oberseite der Schaumstofflage (4) mit einer Unterseite der Schaumstofflage (4) verbinden.

2. Matratze nach Anspruch 1, **gekennzeichnet durch** Durchgangsöffnungen (28a, 28b) unterschiedlicher Weite.

3. Matratze nach Anspruch 1 oder 2, **gekennzeichnet durch** eine Rasteranordnung der Durchgangsöffnungen (28).

4. Matratze nach Anspruch 3, **gekennzeichnet durch** mindestens zwei Rasterbereiche (30 bis 33) mit Durchgangsöffnungen (28a, 28b) unterschiedlicher Weite.

5. Matratze nach Anspruch 4, **dadurch gekennzeichnet, dass** mindestens zwei derartige Rasterbereiche (30 bis 33) das gleiche Rastermaß aufweisen.

6. Matratze nach Anspruch 4 oder 5, **dadurch gekennzeichnet, dass** mindestens zwei derartige Rasterbereiche (30 bis 33) ein unterschiedliches Rastermaß aufweisen.

7. Matratze nach einem der Ansprüche 1 bis 6, **dadurch gekennzeichnet, dass** die körperunterstützende Schaumstofflage (4) viskoelastisch ist und eine Dichte aufweist, die im Bereich liegt zwischen 40 und 60 kg/m³.

8. Matratze nach einem der Ansprüche 1 bis 7, **gekennzeichnet durch** eine Temperatur-Regeleinrichtung (14), die
- mit einem thermisch an die körperunterstützende Schaumstofflage (4) angekoppelten Temperaturfühler (16) und
- mit der Wärmequelle (12)
in Signalverbindung steht.

9. Matratze nach einem der Ansprüche 1 bis 8, **dadurch gekennzeichnet, dass** die Heizlage (5) gleichzeitig eine körperunterstützende Funktion hat.

10. Matratze nach einem der Ansprüche 1 bis 9, **dadurch gekennzeichnet, dass** die Heizlage (5) ein wärmeabgebendes Fluid, insbesondere Wasser, beinhaltet, wobei insbesondere eine Druck-Steuereinrichtung (14) vorgesehen ist, mit der ein Fluiddruck in der Heizlage (5) einstellbar ist.

11. Matratze nach einem der Ansprüche 1 bis 10, **dadurch gekennzeichnet, dass** die körperunterstützende Schaumstofflage (4) von einer Textilauflage (3), insbesondere mit Füllung, abgedeckt ist.

12. Matratze nach einem der Ansprüche 1 bis 11, **dadurch gekennzeichnet, dass** die Heizlage (5) in einer Matratzen-Hauptebene (6) umgrenzt ist von Leisten (7) aus Schaumstoff.

13. Matratze nach einem der Ansprüche 10 bis 12, **dadurch gekennzeichnet, dass** die Heizlage (5) einen Wasserkern (8) mit einem Vlies (10) aufweist, welches von einer flüssigkeitsdichten Folie, insbesondere aus Vinyl, umgeben ist.

14. Matratze nach einem der Ansprüche 1 bis 13, **dadurch gekennzeichnet, dass**
- auf der der körperunterstützenden Schaumstofflage (4) abgewandten Seite der Heizlage (5) eine an die Heizlage (5) angrenzende Softschaumstofflage (19) angeordnet ist, die eine Dichte aufweist, die im Bereich liegt zwischen 35 und 40 kg/m³,
- wobei insbesondere auf der der Heizlage (5) abgewandten Seite der Softschaumstofflage (19) eine an die Softschaumstofflage (19) angrenzende weitere Schaumstofflage (20) angeordnet ist, die eine Dichte aufweist, die im Bereich liegt zwischen 40 und 60 kg/m³.

15. Matratze nach Anspruch 14, **dadurch gekennzeichnet, dass** die weitere Schaumstofflage (20) von einer Textilauflage (21) abgedeckt ist.
